## Europäisches Patentamt

## European Patent Office

## Office européen des brevets

(19)

(11) Numéro de publication: **0 112 747**
**B1**

(12) # FASCICULE DE BREVET EUROPEEN

(45) Date de publication du fascicule du brevet:
**07.01.87**

(51) Int. Cl.⁴: **G 06 K 7/08,** G 06 K 13/077,
G 06 K 13/063

(21) Numéro de dépôt: **83402280.8**

(22) Date de dépôt: **25.11.83**

(54) **Dispositif de traitement automatique d'une carte portant des informations enregistrées.**

(30) Priorité: **03.12.82 FR 8220303**

(43) Date de publication de la demande:
**04.07.84 Bulletin 84/27**

(45) Mention de la délivrance du brevet:
**07.01.87 Bulletin 87/2**

(84) Etats contractants désignés:
**DE**

(56) Documents cités:
**FR - A - 2 315 728**
**FR - A - 2 501 401**
**US - A - 3 572 693**
**US - A - 4 040 097**
**US - A - 4 151 564**

(73) Titulaire: **COMPAGNIE EUROPEENNE DE COMPOSANTS ELECTRONIQUES LCC, 50, rue Jean -Pierre Timbaud B.P. 301, F-92402 Courbevoie (FR)**

(72) Inventeur: **Chabrolle, Jacques, THOMSON-CSF SCPI 173, bld Haussmann, F-75379 Paris Cedex 08 (FR)**

(74) Mandataire: **Ruellan-Lemonnier, Brigitte et al, THOMSON-CSF SCPI 19, avenue de Messine, F-75008 Paris (FR)**

## Description

La présente invention a pour objet un dispositif de traitement automatique d'une carte portant des informations enregistrées.

On connaît de nombreux dispositifs de traitement d'une telle carte. Il est nécessaire de pouvoir bloquer la carte dans son logement lors de son traitement et d'équiper en conséquence le dispositif d'un système de blocage de la carte. La brevet US-A-4151564 divulgue un dispositif où le blocage est obtenu par deux butées, l'une d'entre elles étant commandée par le déplacement d'un chariot mobile portant une tête le lecture. Le dispositif selon le brevet US-A-3572693 comporte deux butées pour bloquer le déplacement du document à traiter. Après son traitement, le document est éjecté en passant la première butée.

Il peut être aussi nécessaire de ne pas restituer sa carte à l'utilisateur lorsque celle-ci présente certaines caractéristiques prédéterminées ou pour éviter les usages frauduleux.

La présente invention a pour objet un dispositif du type précité qui puisse en outre être rendu facilement compatible avec l'utilisation des cartes magnétiques et des cartes électroniques.

L'invention concerne ainsi un dispositif de traitement automatique d'une carte portant des informations enregistrées du type où le traitement est effectué par déplacement de la tête de lecture et immobilisation de la carte entre une butée avant et une butée arrière mobiles, le dispositif de traitement comprenant sur un support:

– des moyens d'entraînement de la carte depuis une position d'introduction jusqu'à une position de lecture déterminée par la mise en contact de la carte avec la butée avant, ces moyens d'entraînement assurant aussi l'éjection de la carte,

– un chariot mobile portant la tête de lecture et commandant l'effacement et la mise en place des butées mobiles en fonction du déroulement du processus de traitement,

– un dispositif de commande automatique de traitement recevant les signaux d'information lus sur la carte et déterminant l'opération d'éjection de la carte, caractérisé en ce que:

– le chariot mobile porte au moins un doigt d'actionnement destiné à commander les butées mobiles,

– chaque butée est une pièce articulée autour d'un axe fixe par rapport au support, possédant un doigt de blocage à l'une de leurs extrémités et étant reliée au support par un ressort de rappel fixé à l'autre extrémité,

– l'effacement et la mise en place des butées mobiles par le doigt d'actionnement s'effectue par l'intermédiaire de leviers mobiles autour d'axes fixes par rapport au support.

Dans le dispositif selon l'invention, la compatibilité entre carte magnétique et carte électronique est assurée par le fait que la carte est immobile pendant les opérations de traitement, ce qui rend possible un raccordement par établissement de contacts électriques sur une carte électronique.

Selon un mode de réalisation, le chariot mobile porte également un dispositif de lecture d'une piste horloge fixée sur une paroi du dispositif. Cette disposition est utile pour certains types de carte magnétique qui doivent être encadrées ou réencodées par le dispositif (voir la demande de brevet français 2501401 déposée le 4 mars 1981 par la Demanderesse).

Le chariot mobile peut être susceptible de coulisser le long d'un axe-support et peut porter au moins un galet d'orientation susceptible de rouler sur la surface parallèle à l'axe-support de manière à maintenir la position angulaire du chariot mobile lors de son coulissement.

La butée arrière peut ainsi comporter un arrêtoir mobile en rotation entre une position de libre passage de la carte et une position de blocage de la carte, et vers laquelle il est rappelé par ressort et il peut être associé à des moyens d'actionnement coopérant avec ledit doigt d'actionnement lorsque le chariot mobile est en position de repos de manière à maintenir l'arrêtoir en position de libre passage de la carte. L'arrêtoir peut comporter à une extrémité un prolongement latéral formant doigt de blocage de la carte. Les moyens d'actionnement peuvent comporter une bielle mobile en rotation et comprenant à une extrémité une came en forme de rampe réalisant ladite coopération avec le doigt d'actionnement, et à son autre extrémité un premier organe de couplage relié à un second organe de couplage porté par la butée arrière. Un des organes de couplage peut être un pion, et l'autre une fente.

La butée arrière peut comporter un deuxième arrêtoir mobile en rotation entre une position de libre passage de la carte et une position de blocage de la carte, et vers laquelle il est rappelé par ressort, et qui peut être associé à des moyens d'actionnement coopérant avec ledit doigt d'actionnement lorsque le chariot mobile dépasse la position de repos pour positionner le deuxième arrêtoir en position de libre passage de la carte de manière à permettre au dispositif d'entraînement de la carte d'éjecter celle-ci. Les moyens d'actionnement peuvent comporter une deuxième bielle mobile en rotation et comprenant à une extrémité un doigt de commande réalisant ladite coopération avec le doigt d'actionnement, et à l'autre extrémité un troisième organe de couplage relié à un quatrième organe de couplage porté par le deuxième arrêtoir. Un des organes de couplage peut être un pion et l'autre une fente. Le deuxième arrêtoir peut être rappelé à une première extrémité par ledit ressort, et présenter un axe de rotation disposé entre ces deux extrémités et comporter à une deuxième extrémité un prolongement latéral formant doigt de blocage de la carte. Le deuxième arrêtoir peut avantageusement porter le quatrième organe de couplage ou voisinage de ladite deuxième extrémité.

Selon un mode de réalisation, chaque butée est associée à un doigt d'actionnement.

Selon une variante, le dispositif d'entraînement de la carte peut comporter une courroie crantée entraînement des galets d'entraînement et un moteur d'entraînement. Les axes des galets d'entraînement peuvent traverser deux parois latérales et ledit moteur d'entraînement peut être fixé sur une desdites parois.

Le dispositif peut comporter un deuxième moteur monté sur une des parois latérales et entraînant une courroie d'entraînement crantée fixée sur un logement inférieur porté par le chariot mobile de manière à permettre le déplacement de ce dernier.

L'invention sera mieux comprise à la lecture de la description qui va suivre, en se reportant aux dessins ci-annexes où:

– la figure 1a représente une vue latérale de la commande des butées d'un dispositif selon l'invention avec arrachement d'une des parois latérales et la fig. 1b représente une vue de dessus correspondant à la fig. 1a;

– les fig. 2a et 2b représentent respectivement en vue latérale et de desssus une glissière de guidage de la carte;

– la fig. 3a représente en vue latérale avec arrachement d'une des parois le dispositif d'entraînement de la carte et la fig. 3b représente une vue de dessus correspondant à la fig. 3a;

– la fig. 4 représente une vue de profil du dispositif selon l'invention;

– les fig. 5a et 5b représentent respectivement en vue latérale et de dessus une pièce support de butée;

– les fig. 6a et 6b représentent en vue latérale et de dessus la butée arrière du dispositif et les fig. 7a et 7b respectivement en vue latérale et de dessus un levier de butée arrière;

– les fig. 8a et 8b représentent la butée avant respectivement en vue latérale et de dessus et

– les fig. 9a et 9b représentent respectivement en vue latérale et en vue de face le levier de butée avant.

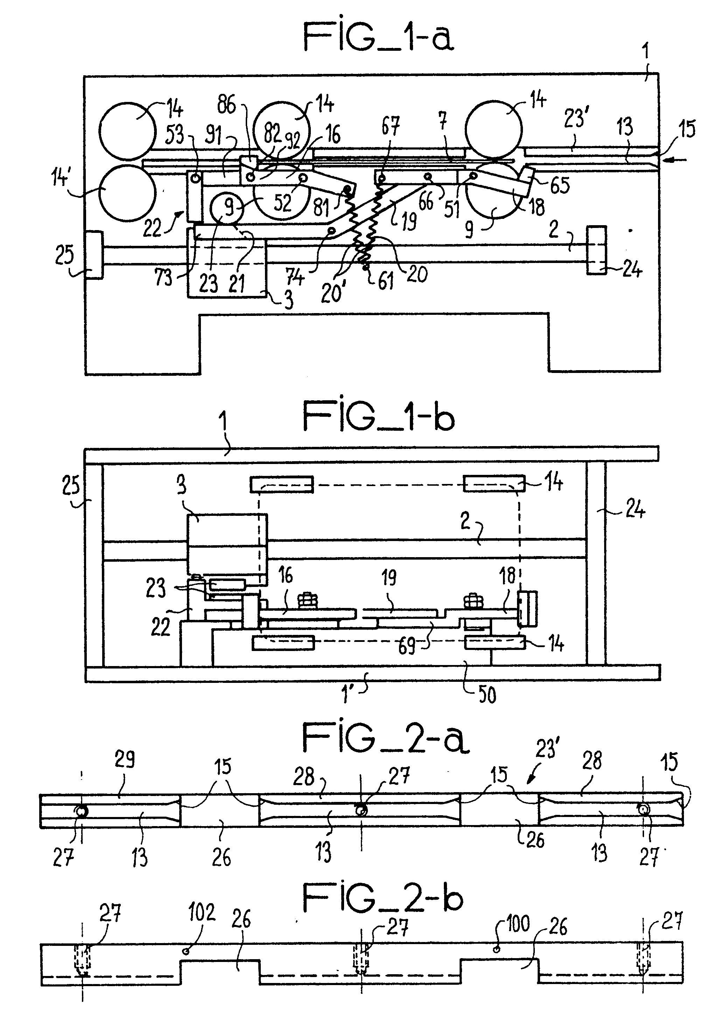

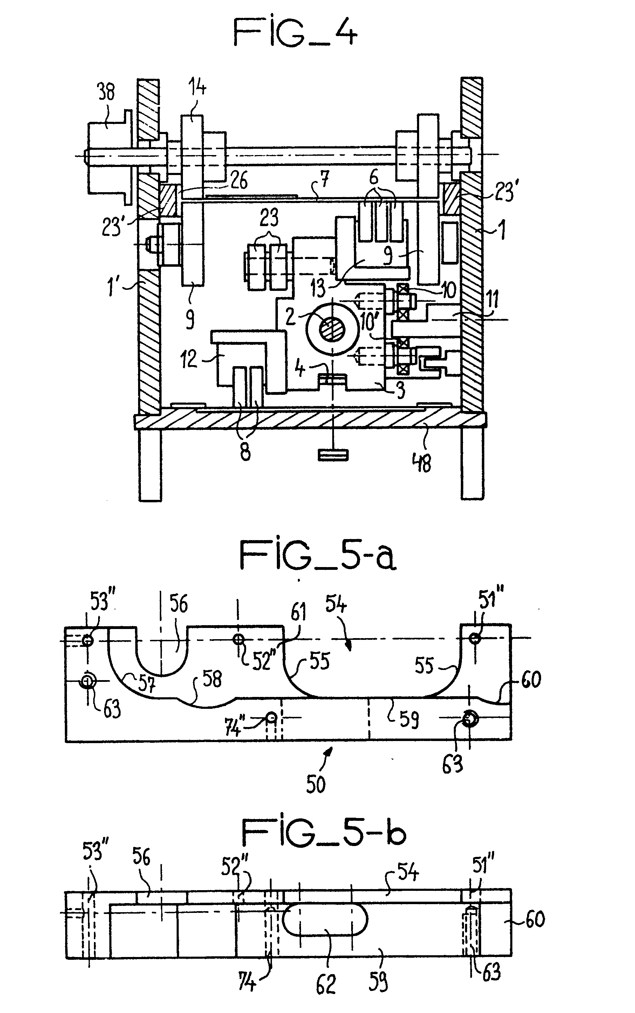

Selon les fig. 1a et 1b, le dispositif selon l'invention comporte deux parois latérales 1 et 1', reliées entre elles par deux entretoises 24 et 25. Entre ces deux entretoises 24 et 25, est disposé un axe 2 le long duquel coulisse un chariot porte-tête 3 (celui-ci sera mieux vu à la fig. 4). La carte magnétique 7 est guidée par les fentes 13 de deux guides 23' montés chacun sur une des parois 1 et 1'. La carte est entraînée par des systèmes de galet respectivement supérieurs 14 et inférieurs 9. Le déplacement de la carte se poursuit jusqu'à un doigt 86 d'une butée avant 16. Cette butée avant 16 est articulée autour d'un axe 52 et est rappelée par un ressort 20' fixé sur un pivot 61. Le pivot 81 sur lequel est accroché le ressort 20' sur la butée avant 16 est situé à l'extrémité opposée du doigt 86.

L'extrémité de la butée avant 16 qui porte le doigt 86 comporte également un pivot 82 coopérant avec une fente 92 ménagée dans la partie avant d'un levier de butée avant 22. Ce levier 22 a la forme générale d'un L dont la grande branche 91 porte à une extrémité la fente 92 et il est mobile en rotation autour d'un axe 53 disposé à la croisée de ces deux branches. La petite branche 93 du L est actionnée par l'un de deux doigts d'actionnement 23 porté par le chariot mobile 3. Le chariot mobile 3 est représenté à la fig. 1a en position de repos dans laquelle la butée arrière laisse libre passage à la carte 7. Lors de la lecture de la carte, la butée arrière 18 vient bloquer la carte 7 en position. Pour ce faire, la butée arrière 18 est montée mobile en rotation autour d'un axe 51 et est rappelée en une position de blocage de la carte par un ressort 20 accroché au pivot 61 d'une part et au pivot 67 de la butée arrière 18 d'autre part. En outre, un levier 19 de commande de butée arrière est mobile en rotation autour d'un axe 74 et porte à une de ses extrémités une fente 76 qui s'engage dans un pion 66 porté par la butée arrière 18. A son autre extrémité, le levier 19 porte une came en forme de rampe 21 se prolongeant par une partie plane 73 sur laquelle repose un doigt d'entraînement 23 lorsque le chariot mobile est en position de repos et permet l'introduction de la carte. Lorsque le chariot mobile 3 se déplace en vue de la lecture de la carte 7, le doigt d'entraînement 23 vient progressivement au contact de la rampe 21 contre laquelle il est appuyé par l'action du ressort 20. Lorsque le doigt d'actionnement 23 a dépassé la rampe 21, le doigt d'extrémité 65 de la butée arrière 18 vient bloquer la carte 7 en position.

Selon les fig. 2a et 2b, chacun des guides 23' de la carte 7 présente une rainure 13 longitudinale légèrement plus large que la carte et présentant des chanfreins d'entrée et de sortie 15. La rainure 13 est en plusieurs tronçons espacés par des ouvertures 26 ici au nombre de 2 et qui sont destinés à laisser passer les galets 9 et 14 d'entraînement de la carte. La rainure 13 se trouve ainsi divisée en deux tronçons 28 en amont respectivement de chacune des deux ouvertures 26, et d'un tronçon aval 29 ne présentant de chanfreins 15 qu'à son entrée. Des taraudages 27 ménagés le long du guide 23' permettent sa fixation sur les parois latérales 1 et 1' du dispositif, parallèlement à l'axe 2 de déplacement du chariot mobile 3.

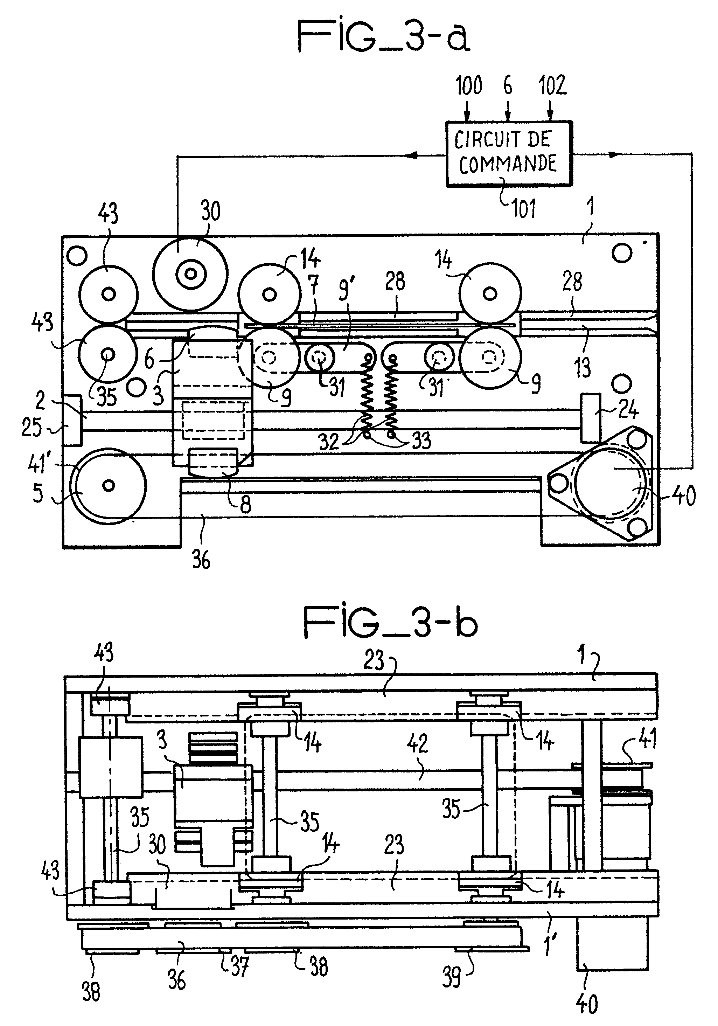

Selon les fig. 3a et 3b, la carte 7 est entraînée par deux paires de rouleaux supérieures 14 montées sur des axes 35 et par deux paires de rouleaux inférieurs 9 au nombre de 4 et qui sont montés sur des supports 9' mobiles autour d'un axe 31 et rappelés par des ressorts 32 fixés en 33 aux parois latérales 1 et 1'. Les ressorts sont montés de manière à plaquer les rouleaux 9 sur les rouleaux 14. En aval du rouleau 14 et dans le prolongement de ceux-ci, deux paires de rouleaux superposés 43 servent à réaliser l'évacuation de la carte lorsque celle-ci ne doit pas être restituée à l'utilisateur. L'axe 35 du premier groupe de deux rouleaux 14 se prolonge par une poulie 39, et le deuxième groupe par une poulie 38. De la même façon, la paire supérieure de rouleaux 43 voit son axe se prolonger du côté de la paroi 1' par une poulie 38. Un peu au-dessus du plan commun aux axes des poulies 14 et de la paire supérieure de poulie 43, la paroi latérale 1' reçoit un moteur 30 disposé entre les deux parois 1 et 1' et dont l'axe se prolonge par une poulie d'entraînement 37. Cette poulie ainsi que les deux poulies 38 précitée et la poulie 39 reçoivent une courroie d'entraînement 36, de préférence crantée et destinée à entraîner en rotation les poulies 14 et 43. Lors de l'introduction de la carte, les poulies 9 font office de galets presseurs et sont également entraînées en rotation par le mouvement de la carte 7.

L'entraînement du chariot mobile 3 est réalisé grâce à un moteur 40 fixé à la partie inférieure de la paroi latérale 1' et qui se prolonge par une poulie d'entraînement 41 autour de laquelle est montée une courroie crantée 42 qui est reçue autour d'une poulie 41' à l'autre extrémité longitudinale du dispositif. Comme on le voit à la fig. 4, la courroie crantée 42 est fixée à un logement inférieur 4 du chariot mobile 3, provoquant ainsi l'entraînement du chariot mobile lors de la rotation du moteur 40. Sur la fig. 4, on voit que le charoit mobile 3 porte des têtes de lecture et/ou d'écriture 6, ici au nombre de 3, portées par un bloc porte-têtes 13 et en contact avec la piste magnétique de la carte 7. Le chariot mobile 3 porte également à sa partie inférieure un bloc porte-têtes 12 sur lequel sont montées des têtes de lecture 8 d'une piste auxiliaire de synchronisation qui est disposée sur une plaque inférieure 48 montée sous le dispositif. Le chariot mobile présente deux doits d'entraînement 23, chacun correspondant à l'actionnement d'une des butées. La présence de deux doigts d'actionnement permet de décaler ceux-ci longitudinalement de manière à tenir compte de la géométrie choisie des butées. Lorsque le chariot mobile 3 se déplace le long de l'axe 2, sa position angulaire est maintenue grâce à des roulettes supérieures et inférieures 10' en contact avec un profilé 11 monté longitudinalement sur la paroi latérale 1.

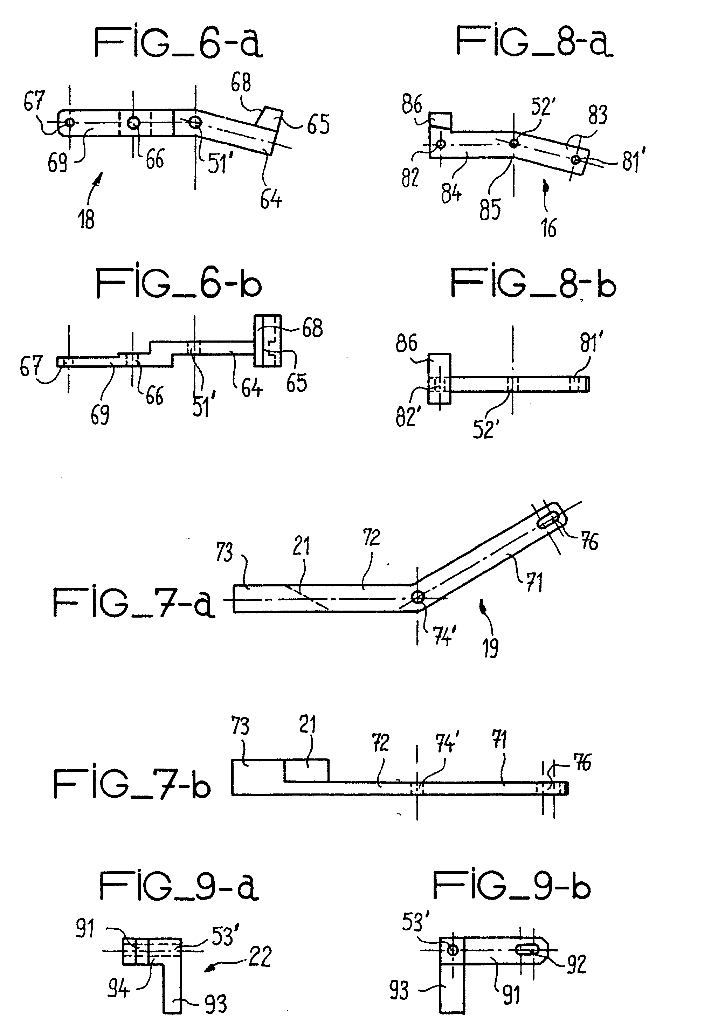

Selon les fig. 5a et 5b, les butées avant 16 et arrière 18 sont montées sur une pièce-support de butée 50, la butée arrière 18 étant pourvue à cet effet d'un alésage 51' correspondant à un alésage 51" du support 50, le montage étant réalisé grâce à l'axe 51 coopérant avec les alésages 51' et 51". De la même manière, la butée avant 16 présente un alésage 52' correspondant à l'alésage 52" du support 50, le montage étant réalisé grâce à l'axe 52 coopérant avec les alésages 52' et 52". Les alésages 51" et 52" sont ménagés sur une paroi latérale 61 du support, laquelle comporte une ouverture 54 bordée de deux arrondis 55 situés entre les alésages 51" et 52", ainsi qu'une ouverture 56. La paroi inférieure du support comporte un méplat 59 bordé de chaque côté par des arrondis 58 et 60, l'arrondi 58 se prolongeant par un profil d'un quart de cercle 57 bordant une paroi transversale dans laquelle est ménagé un alésage 53 destiné au montage du levier de butée avant 22. Cette configuration décrite ménage un espace entre la paroi latérale 61 et la paroi latérale 1' sur laquelle le support 50 est fixé de manière à laisser libre passage aux galets 14 pour lesquels sont ménagés les arrondis 58 et 60.

Selon les fig. 6a et 6b, la butée avant comporte un doigt d'extrémité 65 présentant un profil incliné 68 en contact avec le bord de la carte sur une certaine largeur de celle-ci, le doigt 65 étant disposé à une extrémité d'un bras 64 portant l'alésage 51'. L'autre extrémité de la butée est constituée par un bras décalé latéralement par rapport au bras 64 et situé sensiblement dans le prolongement de celui-ci. Le bras 69 viendra se loger dans la cavité 54 qui lui permet de se déplacer librement. Le levier de butée arrière (fig. 7a et 7b) se présente sous la forme d'un V ouvert à deux bras 71 et 72 à une extrémité duquel est disposée une fente 76 coopérant avec le pion 66 de la butée arrière 18, et à l'autre extrémité un méplat 73 se prolongeant vers l'intérieur par un plan incliné 21 formant came. Un alésage 74' disposé à la jonction des deux branches 71 et 72 permet la fixation du levier 19 dans le prolongement de l'alésage 74" disposé à la partie inférieure du support de butée 50, par coopération avec l'axe 74.

Selon les fig. 8a et 8b, la butée avant 16 comporte deux bras 83 et 84 formant une pièce légèrement coudée en 85. A une extrémité, elle porte un alésage 81' destiné à recevoir un pion 81 de fixation du ressort 20 et à son autre extrémité un doigt 86 formant butée et un alésage 82' destiné à recevoir le pivot 82 coopérant avec l'ouverture 92 du levier de butée avant 22. Au niveau du coude 85, la butée avant 16 présente un alésage 52' permettant son montage dans le prolongement de l'alésage 52" du support 50, le montage étant réalisé par coopération de l'axe 52, et des alésages 52' et 52". L'ouverture 56 du support 50 permet un débattement angulaire de la butée avant 16.

Selon les fig. 9a et 9b, le levier de butée avant présente une partie centrale dans laquelle est ménagé un alésage 53' permettant son montage dans le prolongement de l'alésage 53" du support 50 et deux bras perpendiculaires décalés l'un par rapport à l'autre respectivement 91 et 93. Le bras 93 constitue la partie coopérant avec un des doigts d'actionnement 23 pour la commande de la butée avant. Le bras 91 se prolonge jusqu'à une ouverture 92 destinée à coopérer avec le pivot 82 monté dans l'alésage 82' de la butée 16.

Le fonctionnement du dispositif est alors le suivant. Lorsqu'une carte est introduite selon la flèche de la fig. 1a, un détecteur de présence 100 (fig. 2b) met en route automatiquement le moteur 30 d'entraînement de la carte qui va être ainsi transportée jusqu'au doigt 86 de la butée avant 16 (détection par le détecteur de fin de course 102, fig. 2b). A ce moment, la rotation du moteur 30 est interrompue. Le moteur 40 est ensuite actionné par un circuit de commande 101 qui reçoit les signaux des détecteurs 100 et 102 et des têtes 6 de manière à entraîner le déplacement du chariot mobile 3 et à assurer la lecture de la carte, ce qui libère la butée arrière 18 et bloque la carte 7 en position grâce au doigt 65. Après réalisation des opérations de lecture et/ou d'écriture, le chariot mobile revient sous l'action du circuit de commande 101 vers la position de repos où il libère la butée arrière 18 de manière à laisser libre passage à la carte. Si aucune anomalie de fonctionnement n'a été détectée, le moteur 30 est alors mis en mouvement de manière à restituer la carte à l'utilisateur. Par contre, si au cours de la transaction une anomalie donnée a été détectée, le chariot mobile 3 poursuit son mouvement au-delà de sa position de repos jusqu'à une position dite de rejet ou, par l'intermédiaire du levier 22, il laisse libre passage à la carte vers l'aval par ouverture de la butée avant 16. Le moteur 30 est alors de nouveau mis en route comme lors de l'introduction de la carte, et celle-ci est dirigée vers l'intérieur du dispositif où elle sera éjectée dans un conteneur protégé. L'ensemble de l'appareil de traitement sera alors de nouveau disponible après achèvement du cycle par retour du chariot mobile en position de repos.

## Revendications

1. Dispositif de traitement automatique d'une carte portant des informations enregistrées du type où le traitement est effectué par déplacement de la tête de lecture et immobilisation de la carte (7) entre une butée avant (16) et une butée arrière (18) mobiles, le dispositif de traitement comprenant sur un support (1, 1', 24, 25):
   - des moyens d'entraînement (9, 14) de la carte depuis une position d'introduction jusqu'à une position de lecture déterminée par la mise en contact de la carte avec la butée avant (16), ces moyens d'entraînement assurant aussi l'éjection de la carte,
   - un chariot mobile (3) portant la tête de lecture et commandant l'effacement et la mise en place des butées mobiles en fonction du déroulement du processus de traitement,
   - un dispositif de commande automatique de traitement (101) recevant les signaux d'information lus sur la carte et déterminant l'opération d'éjection de la carte, caractérisé en ce que:
   - le chariot mobile (3) porte au moins un doigt d'actionnement (23) destiné à commander les butées mobiles,
   - chaque butée est une pièce articulée autour d'un axe (51, 52) fixe par rapport au support, possédant un doigt de blocage (86, 65) à l'une de leurs extrémités et étant reliée au support par un ressort de rappel (20, 21) fixé à l'autre extrémité,
   - l'effacement et la mise en place des butées mobiles par le doigt d'actionnement (23) s'effectue par l'intermédiaire de leviers (19, 22) mobiles autour d'axes (53, 74) fixes par rapport au support.

2. Dispositif selon la revendication 1, caractérisé en ce que l'un des leviers (19) est une bielle comprenant à une extrémité une came (21) en forme de rampe coopérant avec le doigt d'actionnement (23) et, à son autre extrémité, un premier organe de couplage (76) relié à un second organe de couplage (66) porté par la butée arrière (18).

3. Dispositif selon la revendication 2, caractérisé en ce que l'un des organes de couplage est un pion et l'autre organe de couplage est une fente.

4. Dispositif selon l'une quelconque des revendications 1 à 3, caractérisé en ce que le levier (22) commandant la butée avant (16) assure l'effacement de cette butée lorsque le doigt d'actionnement (23) dépasse la position de repos du chariot mobile lors de son retour.

5. Dispositif selon la revendication 4, caractérisé en ce que le levier (22) commandant la butée avant est une bielle comprenant une extrémité (93) susceptible de venir en contact avec le doigt d'actionnement (23) et un troisième organe de couplage à l'autre extrémité relié à un quatrième organe de couplage porté par la butée avant.

6. Dispositif selon la revendication 5, caractérisé en ce que l'un des troisième et quatrième organe de couplage est un pion et l'autre une fente.

7. Dispositif selon l'une quelconque des revendications 1 à 6, caractérisé en ce qu'il comporte un doigt d'actionnement pour chaque butée.

8. Dispositif selon l'une quelconque des revendications 1 à 7, caractérisé en ce que le chariot mobile (3) porte également un dispositif (8) de lecture d'une piste horloge fixée sur une paroi (48) du dispositif.

9. Dispositif selon l'une quelconque des revendicationa 1 à 8, caractérisé en ce que le chariot mobile (3) est susceptible de coulisser le long d'un axe-support (2) et porte au moins un galet d'orientation (10, 10') susceptible de rouler sur une surface (11) parallèle audit axe-support (2) et maintenant ainsi la position angulaire du chariot mobile (3) lorsqu'il coulisse.

10. Dispositif selon l'une quelconque des revendications précédentes, caractérisé en ce que le dispositif d'entraînement de la carte comporte une courroie crantée (36) entraînant les galets d'entraînement (14, 9) et un moteur (30) d'entraînement.

11. Dispositif selon la revendication 10, caractérisé en ce qu'il comporte deux parois latérales (1, 1') à travers lesquelles passent les axes (35) des galets d'entraînement et en ce que ledit moteur d'entraînement (30) est fixé sur une desdites parois (1, 1').

12. Dispositif selon l'une des revendications 10 ou 11, caractérisé en ce qu'il comporte un deuxième moteur (40) monté sur une des parois (1') et entraînant une courroie d'entraînement crantée (42) fixée sur un logement inférieur (4) porté par le chariot mobile (3) de manière à permettre le déplacement de ce dernier.

## Patentansprüche

1. Vorrichtung zur automatischen Verarbeitung einer gespeicherte Daten tragenden Karte von der Art, bei der die Verarbeitung durch Verschiebung des Lesekopfes und Arretierung der Karte (7) zwischen einem beweglichen vorderen Anschlag (16) und einem beweglichen hinteren Anschlag erfolgt, wobei die Verarbeitungsvorrichtung auf einem Träger (1, 1', 24, 25) aufweist:
   - Antriebsmittel (9, 14), um die Karte von einer Eingabeposition bis in eine durch Kontakt der Karte mit dem vorderen Anschlag (16) bestimmte Leseposition zu bringen, wobei die Antriebsmittel auch die Ausgabe der Karte sicherstellen,
   - einen beweglichen Wagen (3), der den Lesekopf trägt und das Aus- und Einschwenken der beweglichen Anschläge abhängig vom Ablauf des Verarbeitungsprozesses steuert,

– eine automatische Steuervorrichtung (101) für die Verarbeitung, die die von der Karte gelesenen Datensignale empfängt und die Ausgabeoperation der Karte bestimmt, dadurch gekennzeichnet, dass

– der bewegliche Wagen (3) mindestens einen Betätigungsfinger (23) trägt, der zur Steuerung der beweglichen Anschläge bestimmt ist,

– jeder Anschlag ein um eine bezüglich des Trägers feste Achse (51, 52) schwenkbares Bauteil ist, das einen Blockierfinger (86, 65) an einem seiner Enden besitzt und mit dem Träger über eine am anderen Ende befestigte Rückholfeder (20, 21) verbunden ist,

– das Ausschwenken und Einschwenken der beweglichen Anschläge mit Hilfe des Betätigungsfingers (23) über bewegliche Hebel (19, 22) erfolgt, die um bezüglich des Trägers feste Achsen (53, 74) beweglich sind.

2. Vorrichtung nach Anspruch 1, dadurch gekennzeichnet, dass einer der Hebel (19) eine Kurbelstange ist, die an einem Ende eine rampenförmige Nocke (21) trägt, welche mit dem Betätigungsfinger (23) zusammenwirkt, und die an ihrem anderen Ende ein erstes Koppelorgan (76) aufweist, das mit einem zweiten vom hinteren Anschlag (18) getragenen Koppelorgan (66) verbunden ist.

3. Vorrichtung nach Anspruch 2, dadurch gekennzeichnet, dass eines der Koppelorgane ein Stift und das andere ein Schlitz ist.

4. Vorrichtung nach einem beliebigen der Ansprüche 1 bis 3, dadurch gekennzeichnet, dass der den vorderen Anschlag (16) steuernde Hebel (22) das Wegschwenken dieses Anschlags bewirkt, wenn der Betätigungsfinger (23) die Ruhestellung des beweglichen Weges während dessen Rücklauf überschreitet.

5. Vorrichtung nach Anspruch 4, dadurch gekennzeichnet, dass der den vorderen Anschlag steuernde Hebel (22) eine Kurbelstange ist, deren eines Ende (93) mit dem Betätigungsfinger (23) in Berührung kommen kann und an deren anderem Ende sich ein drittes Koppelorgan befindet, das mit einem vom vorderen Anschlag getragenen vierten Koppelorgan verbunden ist.

6. Vorrichtung nach Anspruch 5, dadurch gekennzeichnet, dass eines der dritten und vierten Koppelorgane ein Stift und das andere ein Schlitz ist.

7. Vorrichtung nach einem beliebigen der Ansprüche 1 bis 6, dadurch gekennzeichnet, dass sie einen Betätigungsfinger für jeden Anschlag aufweist.

8. Vorrichtung nach einem beliebigen der Ansprüche 1 bis 7, dadurch gekennzeichnet, dass der bewegliche Wagen (3) ausserdem eine Vorrichtung (8) zum Lesen einer auf einer Wand (48) der Vorrichtung befestigten Taktspur aufweist.

9. Vorrichtung nach einem beliebigen der Ansprüche 1 bis 8, dadurch gekennzeichnet, dass der bewegliche Wagen (3) entlang einer Trägerachse (2) zu gleiten vermag und mindestens eine Orientierungsrolle (10, 10') besitzt, die auf einer zur Trägerachse (2) parallelen Oberfläche zu rollen vermag und auf diese Weise die Winkelposition des beweglichen Wagens (3) während der Bewegung aufrechterhält.

10. Vorrichtung nach einem beliebigen der vorhergehenden Ansprüche, dadurch gekennzeichnet, dass die Antriebsvorrichtung einen Zahnriemen (36), der die Antriebsrollen (14, 9) antreibt, und einen Antriebsmotor (30) aufweist.

11. Vorrichtung nach Anspruch 10, dadurch gekennzeichnet, dass sie zwei Seitenwände (1, 1') besitzt, durch die die Achsen (35) der Antriebsrollen hindurchgeführt sind, und dass der Antriebsmotor (30) an einer der Wände (1, 1') befestigt ist.

12. Vorrichtung nach einem der Ansprüche 10 oder 11, dadurch gekennzeichnet, dass sie einen zweiten Motor (40) aufweist, der auf einer der Wände (1') montiert ist und einen Antriebszahnriemen (42) antreibt, wobei dieser Riemen an einem vom beweglichen Wagen (3) getragenen unteren Lager befestigt ist, derart, dass die Verschiebung des beweglichen Wagens (3) möglich ist.

**Claims**

1. A device for automatically processing a card bearing recorded data, whereby the processing is obtained by shifting the reading head and immobilising the card (7) between a movable front stop (16) and a movable rear stop (18), the processing device including an a support (1, 1', 24, 25)

– drive means (9, 14) for moving the card from an introduction position to a reading position in which the card touches the front stop (16), these drive means further ensuring the ejection of the card,

– a movable waggon (3) bearing the reading head and controlling the desactivation and the activation of the movable stops in accordance with the run of the processing procedure,

– an automatic process control device (101) receiving the data signals which have been read from the card and which determine the ejection operation of the card, characterized in that

– the movable waggon (3) bears at least one actuating finger (23) conceived to control the movable stops,

– each stop is constituted by a member which is articulated about an axis (51, 52) stationary with respect to the support, said member possessing a blocking finger (86, 65) at one of its ends and being connected to the support by a reset spring (20, 21) which is fixed to the other end,

– the inactivation and the activation of the movable stops by the actuating finger (23) being obtained through levers (19, 22) which are movable about axes (53, 74) stationary with respect to the support.

2. A device according to claim 1, characterized in that one of the levers (19) is a rod, one end of which comprises a ramp-shaped cam (21) which cooperates with the actuating finger (23) and the other end of which comprises a first coupling member (76) connected to a second coupling member (66) borne by the rear stop (18).

3. A device according to claim 2, characterized in that one of the coupling members is a pin and the other coupling member is a slot.

4. A device according to any one of claims 1 to 3, characterized in that the lever (22) controlling the front stop (16) inactivates this stop, if the actuating finger (23) passes beyond the rest position of the movable waggon during its return movement.

5. A device according to claim 4, characterized in that the lever (22) controlling the front stop is a rod, one end (93) of which is susceptible to get into contact with the actuating finger (23) and the other end bears a third coupling member connected to a fourth coupling member which is borne by the front stop.

6. A device according to claim 5, characterized in that one of the third and fourth coupling members is a pin and the other is a slot.

7. A device according to any one of claims 1 to 6, characterized in that it comprises for each stop one actuating finger.

8. A device according to any one of claims 1 to 7, characterized in that the movable waggon (3) further bears a device (8) for reading a clock track which is fixed to a wall (48) of the device.

9. A device according to any one of claims 1 to 8, characterized in that the movable waggon (3) is made to slide along a support axis (2) and bears at least one orientation roller (10, 10') which is made to roll on a surface (11) parallel to the support axis (2) and thus to maintain the angular position of the movable waggon (3) during its sliding movement.

10. A device according to any one of the preceding claims, characterized in that the drive device for the card comprises a toothed belt (36) driving the drive rollers (14, 9), and a driving motor (30).

11. A device according to claim 10, characterized in that it comprises two lateral walls (1, 1') traversed by the axes (35) of the drive rollers, and that said driving motor (30) is fixed to one of said walls (1, 1').

12. A device according to one of claims 10 or 11, characterized in that it comprises a second motor (40) mounted on one of said walls (1') and driving a toothed drive belt (42) which is fixed to a lower accomodation (4) borne by the movable waggon (3) in order to allow the displacement of the latter.

## FIG_1-a

## FIG_1-b

## FIG_2-a

## FIG_2-b

0112747

## FIG_3-a

## FIG_3-b

11

# FIG_4

# FIG_5-a

# FIG_5-b

FIG_6-a

FIG_8-a

FIG_6-b

FIG_8-b

FIG_7-a

FIG_7-b

FIG_9-a

FIG_9-b